# FASCICULE DE BREVET EUROPEEN

(11) **EP 1 421 777 B1**
(45) Date de publication et mention de la délivrance du brevet: **19.04.2017**
(21) Numéro de dépôt: 02748934.3
(22) Date de dépôt: 05.06.2002
(51) Int. Cl.: G06T 1/00, H04N 1/387, H04N 1/58

(54) **PROCEDE ET SYSTEME POUR CORRIGER LES ABERRATIONS CHROMATIQUES D'UNE IMAGE COULEUR REALISEE AU MOYEN D'UN SYSTEME OPTIQUE**
VERFAHREN UND SYSTEM ZUR KORREKTUR DER CHROMATISCHEN ABERRATIONEN IN EINEM MIT EINEM OPTISCHEN SYSTEM HERGESTELLTEN FARBBILD
METHOD AND SYSTEM FOR CORRECTING CHROMATIC ABERRATIONS OF A COLOUR IMAGE PRODUCED BY AN OPTICAL SYSTEM

(30) Priorité: 12.07.2001 FR 0109291; 12.07.2001 FR 0109292; 02.10.2001 FR 0112664
(43) Date de publication de la demande: 26.05.2004
(73) Titulaire: DxO Labs, 92100 Boulogne Billancourt (FR)
(72) Inventeur: CHAUVILLE, Benoît, F-75011 Paris (FR); GUICHARD, Frédéric, F-75012 Paris (FR); LAVEST, Jean-Marc, F-63000 Clermont-Ferrand (FR); LIEGE, Bruno, F-75015 Paris (FR)
(74) Mandataire: Ipside
(86) Numéro de dépôt international: PCT/FR2002/001913
(87) Numéro de publication internationale: WO 2003/007592

(56) Documents cités:
- EP-A- 0 595 301
- EP-A- 0 878 970
- WO-A1-00/07376
- FR-A1- 2 556 159
- US-A- 5 276 519
- US-B1- 6 219 446

## Description

### Préambule de la description

### Domaine concerné, problème posé

La présente invention concerne un procédé, un système pour corriger les aberrations chromatiques d'une image couleur réalisée au moyen d'un système optique.

On connaît US-B1-6 219 446 qui décrit une technique de correction en distorsion et en aberration chromatique d'images. On connaît par ailleurs EP-A-0 595 301 qui décrit une technique de modification de l'aberration et de l'enregistrement d'une image.

### Solution

### Procédé

L'invention concerne un procédé pour corriger les aberrations chromatiques d'une image couleur composée de plusieurs plans couleurs numérisés. L'image couleur a été réalisée au moyen d'un système optique. Le procédé comprend les étapes suivantes :
- l'étape de modéliser et de corriger, au moins en partie, des anomalies de géométrie des plans couleurs numérisés, de manière à obtenir des plans couleurs numérisés corrigés,
- l'étape de combiner les plans couleur numérisés corrigés, de manière à obtenir une image couleur corrigée, en totalité ou en partie, des aberrations chromatiques.

De préférence, selon l'invention, le procédé comprend l'étape de modéliser et de corriger, au moins en partie, les anomalies de géométrie constituées par des écarts entre les défauts de géométrie, notamment de distorsion, des plans couleurs numérisés, de manière à obtenir des plans couleurs numérisés corrigés. Ainsi, il est possible d'établir une correspondance entre les plans couleurs numérisés corrigés. Le procédé comprend en outre l'étape de combiner les plans couleur numérisés corrigés, de manière à obtenir une image couleur corrigée, en totalité ou en partie, des aberrations chromatiques.

De préférence, selon l'invention, le procédé comprend l'étape de modéliser et de corriger, au moins en partie, les anomalies de géométrie constituées par des défauts de distorsion des plans couleurs numérisés, de manière à obtenir des plans couleurs numérisés corrigés. Ainsi, il est possible d'établir une correspondance entre les plans couleurs numérisés corrigés. Le procédé comprend en outre l'étape de combiner les plans couleurs numérisés corrigés, de manière à obtenir une image couleur corrigée, en totalité ou en partie, des aberrations chromatiques et des défauts de distorsion.

### Système

L'invention concerne également un système pour corriger les aberrations chromatiques d'une image couleur composée de plusieurs plans couleurs numérisés. L'image couleur a été réalisée au moyen d'un dispositif optique. Le système comprend :
- des premiers moyens de calcul pour modéliser et pour corriger des anomalies de géométrie des plans couleurs numérisés, de manière à obtenir des plans couleurs numérisés corrigés,
- des seconds moyens de calcul pour combiner les plans couleurs numérisés corrigés, de manière à obtenir une image couleur corrigée, en totalité ou en partie, des aberrations chromatiques.

De préférence, selon l'invention le système comprend des premiers moyens de calcul pour modéliser et pour corriger, au moins en partie les anomalies de géométrie constituées par des écarts entre les défauts de géométrie, notamment de distorsion, des plans couleurs numérisés, de manière à obtenir des plans couleurs numérisés corrigés. Ainsi, il est possible d'établir une correspondance entre les plans couleurs numérisés corrigés. Le système comprend en outre des seconds moyens de calcul pour combiner les plans couleurs numérisés corrigés, de manière à obtenir une image couleur corrigée, en totalité ou en partie, des aberrations chromatiques.

De préférence, selon l'invention l'image couleur a été réalisée au moyen d'un système dispositif optique. Le système comprend des premiers moyens de calcul pour modéliser et pour corriger, au moins en partie des anomalies de géométrie constituées par des défauts de distorsion des plans couleurs numérisés, de manière à obtenir des plans couleurs numérisés corrigés. Ainsi, il est possible d'établir une correspondance entre les plans couleurs numérisés corrigés. Le système comprend en outre des seconds moyens de calcul pour combiner les plans couleurs numérisés corrigés, de manière à obtenir une image couleur corrigée, en totalité ou en partie, des aberrations chromatiques et des défauts de distorsion.

### Description détaillée

D'autres caractéristiques et avantages de l'invention apparaîtront à la lecture de la description de variantes de réalisation de l'invention donnée à titre d'exemple indicatif et non limitatif, et de la
- figure 1 qui représente une première variante de réalisation d'un système selon l'invention plus particulièrement conçu pour corriger les aberrations chromatiques et les défauts de distorsion,
- figure 2 qui représente une deuxième variante de réalisation d'un système selon l'invention plus particulièrement conçu pour corriger les aberrations chromatiques.
- des figures 3 à 7 qui représentent une troisième variante de réalisation d'un système selon l'invention plus particulièrement conçu pour corriger les aberrations chromatiques et les défauts de distorsion.
- de la figure 8 qui représente un exemple de réalisation d'un système selon l'invention.
- de la figure 9 qui représente un second exemple de réalisation d'un système selon l'invention.

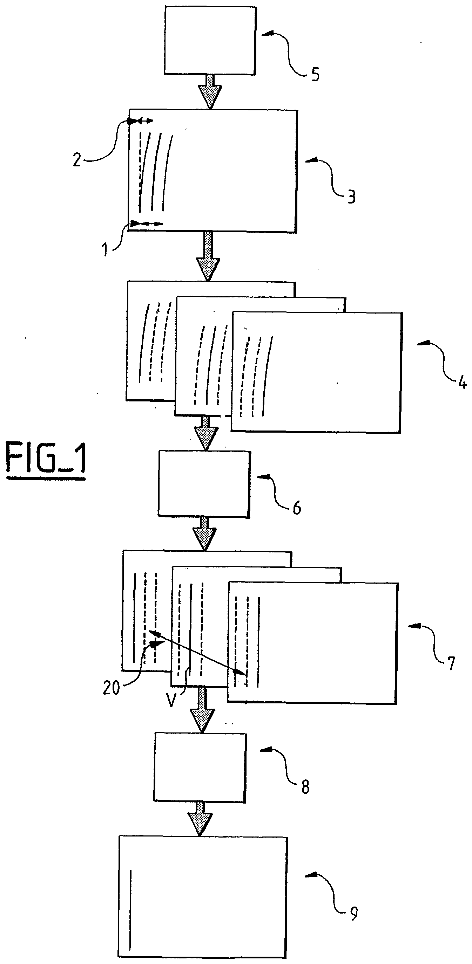

On va maintenant décrire en se référant à la figure 1 la première variante de réalisation.

Dans le cas de la première variante de réalisation, le système est plus particulièrement conçu pour corriger les aberrations chromatiques 1 et les défauts de distorsions 2 d'une image couleur 3 composée de plusieurs plans couleurs numérisés 4. L'image couleur 3 a été réalisée au moyen d'un système optique 5.

Le système comprend des premiers moyens de calcul 6 pour modéliser et pour corriger, au moins en partie, les défauts de distorsion 2 des plans couleurs numérisés 4, de manière à obtenir des plans couleurs numérisés corrigés 7. Ainsi, il est possible d'établir une correspondance 20 entre les plans couleurs numérisés corrigés 7.

Le système comprend en outre des seconds moyens de calcul 8 pour combiner les plans couleurs numérisés corrigés 7, de manière à obtenir une image couleur corrigée 9, en totalité ou en partie, des aberrations chromatiques 1 et des défauts de distorsion 2.

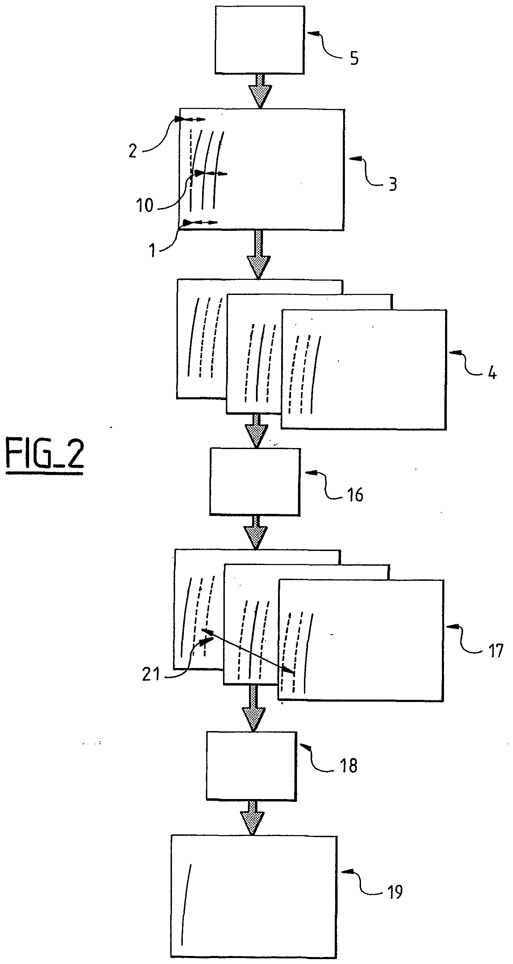

On va maintenant décrire en se référant à la figure 2 la deuxième variante de réalisation.

Dans le cas de la deuxième variante de réalisation, le système est plus particulièrement conçu pour corriger les aberrations chromatiques. De même que dans le cas de la première variante de réalisation, l'image couleur 3 a été réalisée au moyen d'un système optique 5. Le système comprend des premiers moyens de calcul 16 pour modéliser et pour corriger, au moins en partie, les écarts 10 entre les défauts de distorsion 2 des plans couleurs numérisés 4, de manière à obtenir des plans couleurs numérisés corrigés 17. Ainsi, il est possible d'établir une correspondance 21 entre les plans couleurs numérisés corrigés 17.

Le système comprend en outre des seconds moyens de calcul 18 pour combiner les plans couleur numérisés corrigés 17, de manière à obtenir une image couleur corrigée 19, en totalité ou en partie, des aberrations chromatiques 1.

Dans le cas d'une troisième variante de réalisation, le système est plus particulièrement conçu pour corriger les aberrations chromatiques d'une image couleur composée de plans couleurs numérisés. Nous expliciterons en détails un exemple de réalisation comportant l'étape de modéliser et corriger des anomalies de géométrie, par exemple de distorsion, des plans couleur numérisés de manière à obtenir des plans couleur numérisés corrigés et l'étape de combiner les plans couleurs numérisés corrigés, pour obtenir une image couleur corrigée des aberrations chromatiques. L'image couleur est réalisée à l'aide d'un système optique, ce qui consiste dans l'exemple décrit à capturer ou restituer l'image couleur à l'aide d'un appareil et/ou d'une chaîne d'appareils.

### Modéliser

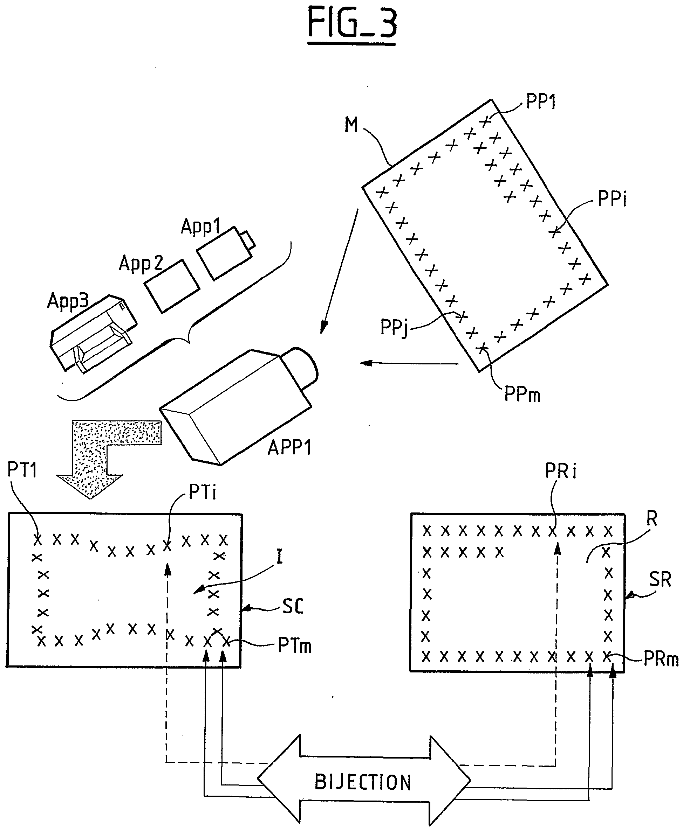

La figure 3 représente une description précise d'un exemple d'implémentation du système de l'invention et du procédé mis en oeuvre. Nous nous attacherons dans un premier temps à décrire un exemple de processus de modélisation exclusivement axé sur les défauts de distorsion de l'image I correspondant à un plan couleur numérisé. L'approche sera ensuite appliquée aux images couleur permettant alors la modélisation et la correction des aberrations chromatiques et/ou géométriques. Le processus décrit en figure 3 met en oeuvre :
- un référentiel M qui peut être une scène de référence.
- un support SC comportant une image I. Dans le cas d'un système de capture d'images, la surface SC peut être celle d'un capteur (CCD par exemple), ou dans le cas d'un système de restitution d'images, cette surface peut être celle d'un écran de projection ou celle d'une feuille de papier d'une imprimante.
- une surface de référence virtuelle SR comportant une référence virtuelle R ou image de référence virtuelle qui peut être éventuellement une image de synthèse.

L'image I est obtenue à partir du référentiel M à l'aide d'un appareil APP1 ou d'une chaîne d'appareils sur un support SC, et en ne conservant qu'un plan couleur numérisé. Une chaîne d'appareils est un ensemble d'appareils permettant d'obtenir une image. Par exemple, une chaîne d'appareils App1/App2 /App3 pourra comprendre un appareil de capture d'images, un scanner, un appareil d'impression, etc.

L'image I comporte donc des défauts et notamment des défauts de distorsions liés à ces appareils.

La référence virtuelle R est déduite directement de M et doit être considérée comme parfaite ou comme quasi-parfaite. Elle peut être identique ou quasi-identique à M ou au contraire présenter des différences comme on le verra ultérieurement.

A titre d'exemple, nous pouvons expliciter le lien entre M et R de la manière suivante : A des points PP1 à PPm du référentiel M correspondent des points de référence PR1 à PRm dans la référence virtuelle R de la surface de référence SR ainsi que des points caractéristiques images PT1 à PTm de l'image I du support SC.

Selon un exemple de réalisation du procédé de l'invention, on prévoit donc une étape de modélisation des défauts à partir de l'image I capturée et/ou restituée à l'aide de l'appareil ou de la chaîne d'appareils APP1.

Au cours d'une étape suivante, on choisit un certain nombre de points PTi, PRi. Ces points sont choisis en nombres limités et sont situés en des zones caractéristiques du référentiel M, de l'image I et de la référence virtuelle R. Puis on établit une bijection entre les points PTi de l'image et les points PRi de la référence virtuelle. Ainsi, à chaque point PTi choisi, on fait correspondre un point PRi correspondant et réciproquement.

Pour une image, il est possible d'obtenir un champ mesuré DH qui permettra de produire des informations formatées mesurées.

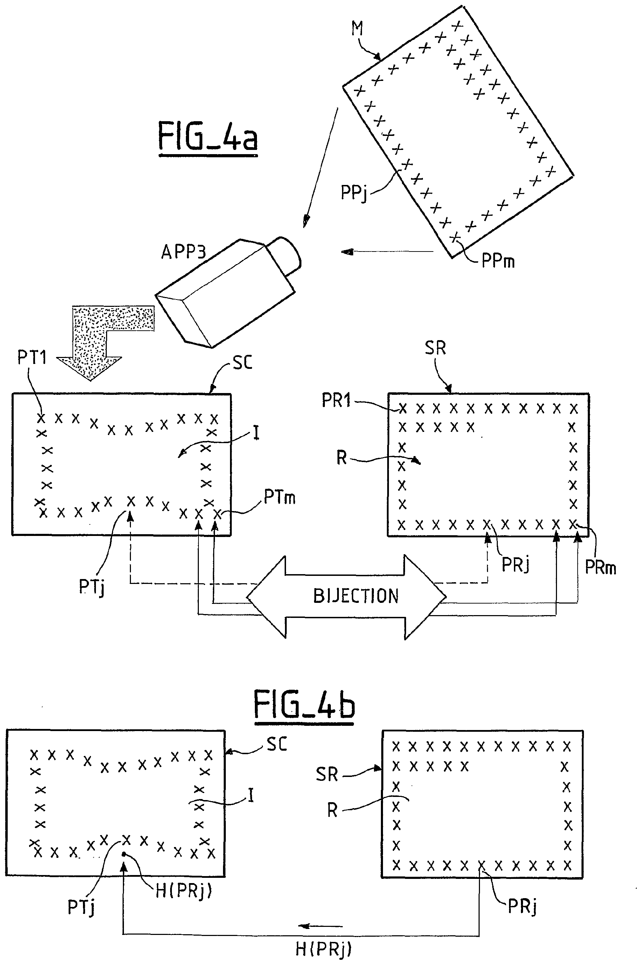

La figure 4a représente une forme possible d'obtention d'un champ mesuré DH. Sur cette figure, on retrouve le référentiel M, la surface de référence SR et le support SC. On procède à la réalisation de l'image I sur le support SC à l'aide d'un appareil APP3. Puis, on réalise la bijection décrite précédemment. Ensuite, on établit une projection mathématique H et de préférence une homographie entre un point du support SC et un point de la surface de référence SR.

Sur la figure 4b, on voit que, pour chaque point PRj de la surface de référence, on peut obtenir un point H(PRj) de l'image par projection mathématique. De préférence, pour deux points PRj et PTj d'un couple liés par bijection, on a un point H(PRj), projection mathématique de PRj sur le support SC.

Un champ mesuré DH comporte donc :
- pour différents points de référence PR, la projection mathématique H(PRj) du point de référence PRj sur le support SC fournissant ainsi un nouveau point H(PRj) associé au point PTj correspondant par bijection. On a ainsi dans le champ mesuré une série de couples de points liés par bijection, dans chaque couple, un point étant la projection mathématique de l'autre point du couple.

Le champ DH d'une image pourra également être constitué de toute variante d'association liant les point PR, PT H(PR) et H(PT).

Il est possible sans que cela soit obligatoire, de choisir des caractéristiques variables de l'appareil (ou de la chaîne d'appareils) APP3 parmi celles utilisées pour obtenir l'image I avec l'appareil APP3. Les caractéristiques variables d'un appareil ou d'une chaîne d'appareils peuvent comprendre la focale de l'optique d'un appareil, le focus, l'ouverture, le numéro de la photo dans un ensemble de photos, le zoom numérique, les caractéristiques d'une capture partielle d'image (« crop » en terminologie anglo-saxonne), etc.

Avec ce champ mesuré pour l'image I, on constitue un ensemble d'informations formatées mesurées IFM. Une information formatée mesurée d'un point PTj, comprendra donc selon l'exemple précédent :
- les caractéristiques fixes du ou des appareils utilisés ;
- les caractéristiques variables choisies ;
- la position en X et Y du point dans l'image PTj ;
- la projection mathématique du point PRj correspondant par bijection.

### Modèle paramétrable

L'exploitation du système conduira à être obligé de traiter un grand nombre de points et donc un grand nombre d'informations formatées mesurées. Pour assouplir le fonctionnement du système, accélérer le traitement et/ou être robuste aux erreurs de mesures, le procédé prévoit de déduire, à partir des informations formatées mesurées IFM1 à IFMm, des informations formatées étendues IFE1 à IFEm appartenant à une surface (ou une hypersurface) pouvant être représentée par une fonction choisie dans un espace de dimension fini comme par exemple un polynôme d'ordre limité choisi parmi la classe des polynômes de degrés fini, ou une fonction spline de degrés approprié ou tout autre fonction d'approximation.

Dans ce qui précède, on a vu qu'une information formatée pouvait contenir des caractéristiques variables. En fait, il pourra s'agir d'une combinaison de caractéristiques variables telle que par exemple une combinaison de la focale, de la mise au point, de l'ouverture de diaphragme, de la vitesse de capture, de l'ouverture, etc.

Dans ces conditions, lors du traitement d'une image, au lieu d'avoir recours à un grand nombre d'informations formatées mesurées et/ou étendues, le système pourra utiliser un modèle d'interpolation et/ou d'extrapolation paramétrable estimé à partir d'informations formatées mesurées et/ou étendues pour des arguments constitués de combinaisons de caractéristiques variables connues.

### Point quelconque

Pour un point quelconque PTQ/PRQ , il suffit de réinjecter par exemple l'argument (X, Y, focale, distance, ouverture, iso, vitesse, flash, etc.) relatif à ce point au sein du modèle paramétrable pour trouver les informations formatées relatives audit point X,Y et de ce fait revenir au cas d'un appareil sans paramètre variable. Les informations formatées relatives audit argument permettent de déterminer par exemple le point homologue à X,Y et de supprimer tout ou partie du défaut.

### Homographie

Une façon efficace de calculer la projection mathématique entre la surface de référence SR et la surface support SC peut être réalisée par exemple en choisissant sur le support SC et sur la surface de référence SR, quatre points PTm1 à PTm4 et PRm1 à PRm4 se correspondant par bijection et étant par exemple aux limites périphériques du support SC et de la surface de référence SR. Les positions de ces points sont choisies par exemple de façon à maximiser les surfaces comprises entre ces points.

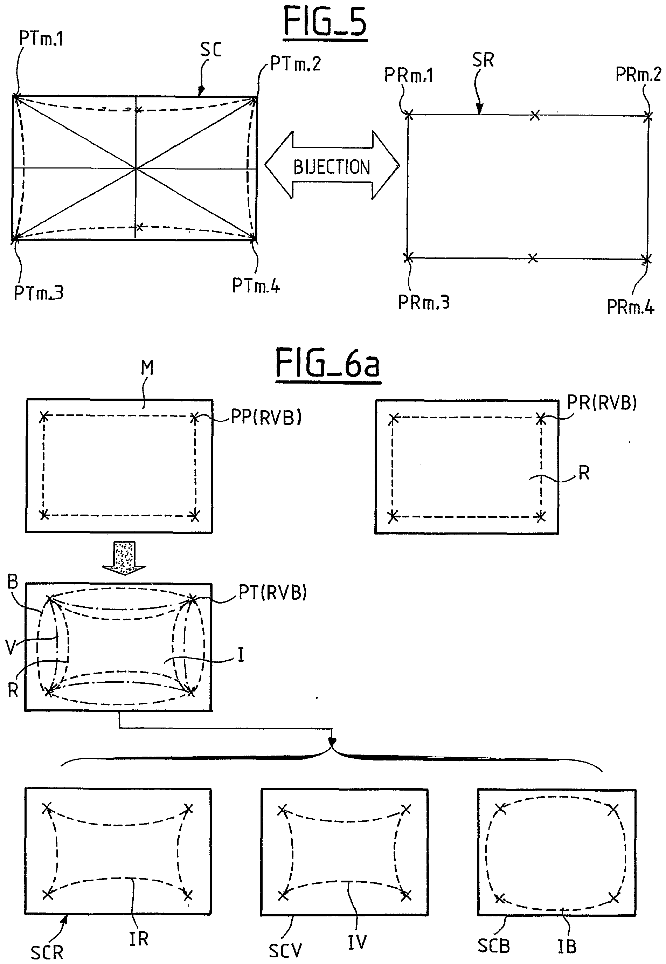

De plus, comme représenté sur la figure 5, les positions de ces points sont telles que l'intersection des diagonales des quadrilatères définis par ces points se trouve au centre ou proche du centre des quadrilatères.

Ensuite, on calcule une projection mathématique, notamment une homographie par exemple, permettant de transformer les quatre points caractéristiques PTm.1 à PTm.4 en les quatre points de référence PRm.1 à PRm.4. Cette projection mathématique sera associée aux informations formatées de l'image.

### Images couleur

En se reportant aux figures 6a à 6d, on va décrire des procédés de calcul d'informations formatées relatives à des images couleurs. Une image couleur peut être considérée comme étant constituée de plusieurs images monochromes correspondant chacune à un plan couleur de l'image couleur. Classiquement, on peut considérer qu'une image couleur est une image trichrome constituée de trois images monochromes (rouge, vert, bleu). On sait qu'en optique, les distorsions induites par les optiques et les milieux de transmission de la lumière induisent des effets différents sur les différentes longueurs d'onde. Dans une image trichrome, le même défaut physique d'un appareil induira donc des distorsions différentes sur l'image véhiculée par la lumière à la longueur d'onde voisine du rouge, sur celle véhiculée à la longueur d'onde voisine du vert et sur celle véhiculée à la longueur d'onde voisine du bleu.

Comme représentée en figure 6a, à partir d'un référentiel M trichrome, auquel correspond une référence virtuelle R quasiment identique, correspondra dans l'image I trois images IR, IV et IB superposées qu'on a représentées séparément sur les plans SCR, SCV et SCB. Les trois images IR, IV et IB présentent des distorsions différentes ce qui donne une image trichrome qui présente à la fois de la distorsion géométrique et des aberrations chromatiques.

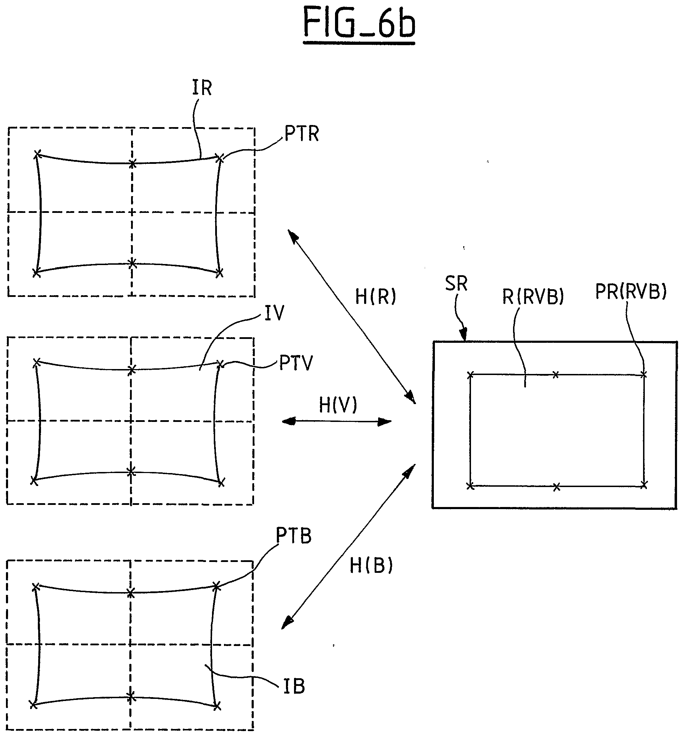

La figure 6b représente le principe du procédé permettant d'obtenir des informations formatées qui permettront à un logiciel de traitement d'images de corriger les distorsions et/ou les aberrations chromatiques.

Selon ce procédé pour chaque point trichrome de l'image, on va calculer une information formatée par couleur. On va donc considérer qu'il convient de corriger autant d'images monochromes qu'il y a de couleurs. Dans l'exemple trichrome, les calculs seront faits comme si on avait trois images à corriger.

Pour le calcul des informations formatées des trois images IR, IV et IB, on utilise les mêmes procédés que ceux décrits en relation avec les figures 3 à 5.

Selon la figure 6b, on a représenté la surface SR avec une référence virtuelle R comportant des points trichromes PR(RVB) ainsi que la décomposition de l'image I en trois images monochromes IR, IV, IB comportant chacune des points d'une seule couleur PTR, PTV, PTB.

Une façon de calculer les informations formatées relatives à un point trichrome, est d'utiliser la même référence virtuelle R pour les trois plans couleurs. On utilise alors trois projections mathématiques : une projection mathématique HR pour le point rouge PTR, une projection HV pour le point vert PTV et une projection HB pour le point bleu PTB, comme cela est représenté en figure 6b.

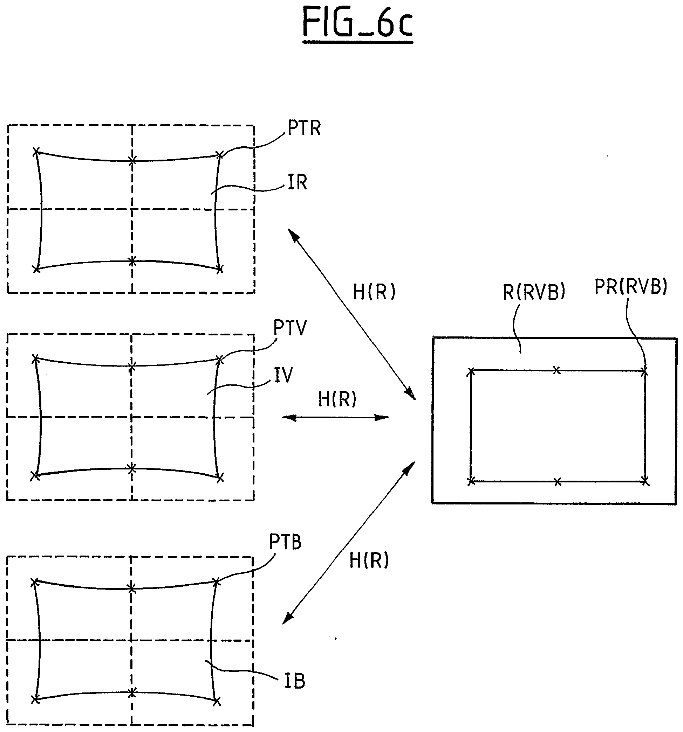

Une autre façon de procéder, selon la figure 6c est d'utiliser la même référence virtuelle R et de calculer pour chaque plan couleur des informations formatées en utilisant une même projection mathématique définie au choix sur un des plans couleur. Par exemple, on ne calcule que la projection mathématique HR relative au point rouge. Ensuite, on applique cette transformation mathématique aux trois points rouge, vert et bleu pour calculer les informations formatées de ces trois points. Dans ce cas, on permettra à un logiciel de traitement d'image de corriger à la fois les distorsions géométriques et les aberrations chromatiques de l'image. La combinaison des plans couleur corrigés est réalisée par simple superposition, puisque la référence virtuelle R et la projection mathématique HR sont communes aux plans couleurs.

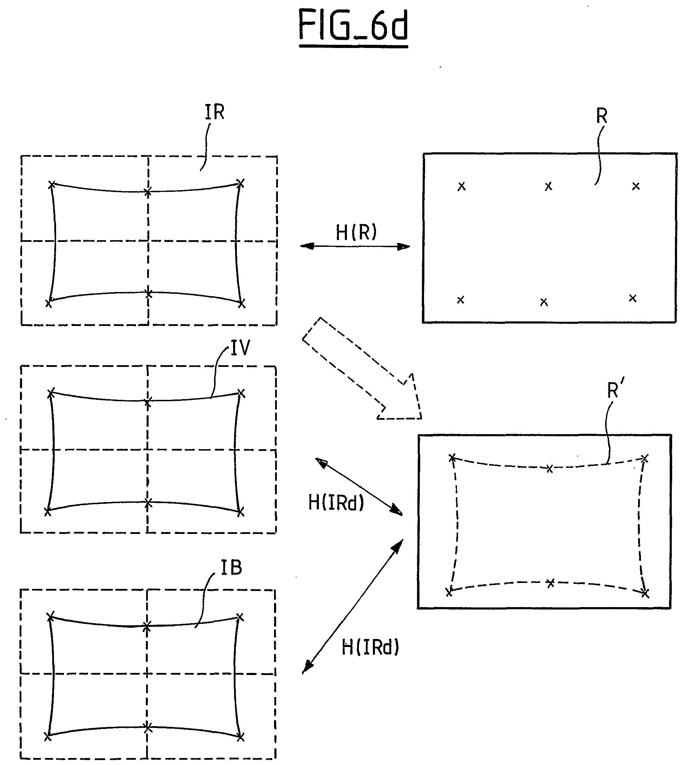

Une autre façon de procéder représentée par la figure 6d consiste :
- Pour l'image d'une couleur déterminée, l'image rouge IR par exemple, à calculer les informations formatées en utilisant une référence virtuelle R supposée parfaite et une projection mathématique H(R) des points de la référence virtuelle sur la surface de l'image rouge IR, ce qui permettra de corriger les distorsions de l'image rouge.
- Pour les images des autres couleurs, les images verte et bleue IV et IB par exemple, à utiliser comme référence virtuelle R', l'image de couleur précédente, l'image rouge IR selon l'exemple pris, et à réaliser une même projection mathématiques H(IRd) des points de cette image rouge sur les surfaces des images verte IV puis bleue IB. De préférence, cette projection mathématique sera une identité (ou projection par identité) des points de l'image rouge sur les images verte et bleue. De cette façon on pourra supprimer les différences (aberrations chromatiques) entre les images rouge, verte et bleue. Les informations formatées des points des images verte et bleue pourront comporter la projection mathématique des points de la référence virtuelle R sur l'image rouge ainsi que la projection mathématiques (identité) de l'image rouge sur les images verte et bleue respectivement. Cette façon de procéder peut permettre le cas échéant de corriger les aberrations chromatiques seules si on n'utilise que les informations formatées relatives aux images verte et bleue,. La combinaison des plans couleur corrigés est réalisée par simple superposition, puisque la référence virtuelle R et la projection mathématique HR sont communes aux plans couleurs.

Dans ce qui précède, on a considéré que la référence virtuelle R était quasiment identique au référentiel M. Si on considère que la référence virtuelle R est exactement identique au référentiel M, on pourra calculer des informations formatées qui permettront de corriger l'image I pour qu'elle soit la réplique exacte du référentiel M.

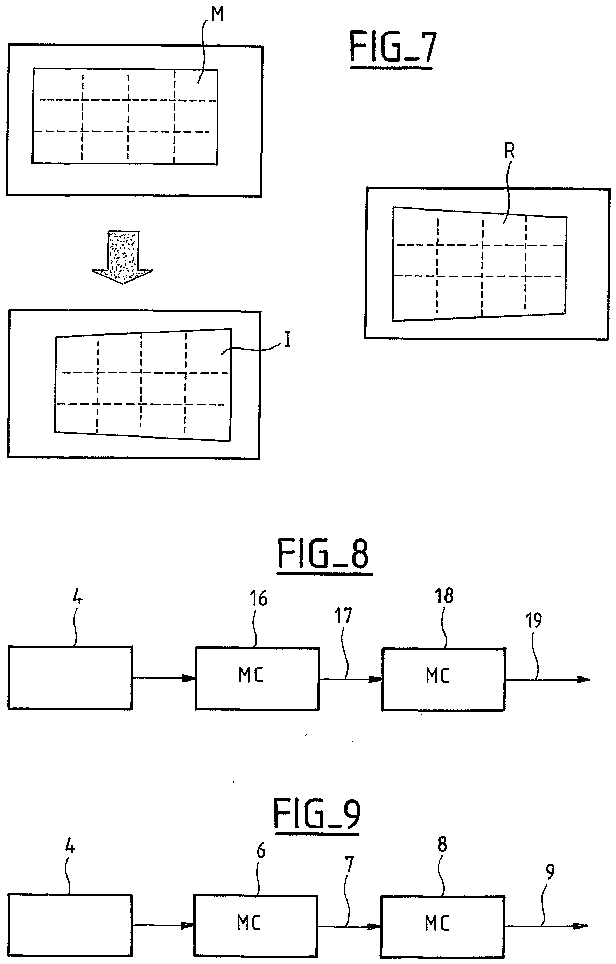

On peut prévoir, comme cela est représenté en figure 7 que la référence virtuelle R est déformée par rapport au référentiel M. Par exemple, la référence virtuelle a une forme trapézoïdale alors que le référentiel M a une forme rectangulaire. Les informations formatées qu'on obtiendra permettront de corriger l'image I pour induire une déformation en forme de trapèze sur l'image corrigée. Un exemple d'application d'une telle disposition se trouve dans les rétroprojecteurs où on va pouvoir corriger la déformation bien connue induite par ces appareils lors des projections du fait que l'axe du faisceau de projection n'est pas perpendiculaire au plan de l'écran.

On peut également déformer la référence virtuelle par des distorsions pour induire des caractéristiques voire des défauts obtenus avec d'autres appareils que ceux obtenus par les appareils ayant permis de faire l'image I. On pourra, par exemple, induire dans la référence virtuelle des caractéristiques d'appareils perfectionnés ou au contraire d'appareils anciens pour donner un aspect particulier à l'image corrigée. Les informations formatées, les informations formatées mesurées, ou les informations formatées mesurées étendues et obtenues avec une telle référence virtuelle intègrent les distorsions que l'on a induites dans la référence virtuelle., de sorte que les informations formatées et/ ou les informations formatées mesurées peuvent être utilisées par des logiciels de traitement d'images capturées par un premier appareil de capture d'image, pour obtenir des images de qualité comparable en terme de distorsions et/ou aberration chromatiques, à celle d'un deuxième appareil de capture d'image. Cette technique est également applicable à la restitution d'image en considérant qu'un logiciel de traitement d'images peut alors restituer une image à l'aide d'un premier appareil de restitution de qualité comparable en terme de distorsion et/ou d'aberrations chromatiques à celle fournie par un deuxième appareil de restitution.

Dans la description qui précède, on a considéré que l'image est constituée de points et on fait porter les traitements des procédés décrits sur des points. Cependant, sans sortir du cadre de l'invention, les procédés décrits pourraient traiter des ensembles de points formant des éléments et représentant des motifs (pastilles, etc.).

Dans le cas l'appareil ou la chaîne d'appareils possède une caractéristique variable qui ne peut posséder qu'un nombre réduit de valeurs discrètes (trois valeurs discrètes de focale par exemple), on a intérêt en terme de précision à mettre en oeuvre, selon l'exemple pris, trois fois le processus à focale fixe plutôt que d'utiliser une surface polynomiale correspondant à une approximation qui inclurait la focale comme paramètre.

Le champ d'application du dispositif peut couvrir le champ d'application relatif à la qualité des images, étant entendu que la qualité des images peut, entre autre, se mesurer en terme de distorsion et/ou aberrations chromatiques résiduelles qu'elles incluent. L'invention s'applique également au domaine de la mesure à partir de la vision par ordinateur connue sous l'expression «métrologie par vision ».

Si le procédé est mis en oeuvre dans le cas d'une chaîne d'appareils comportant plusieurs appareils, par exemple un projecteur et un appareil photo, ou par exemple une imprimante et un scanner et que l'un des appareils, par exemple l'appareil photo ou le scanner ne présente pas ou peu de défaut de distorsion et /ou aberration chromatique, le procédé produit des informations formatées relatives à l'autre appareil uniquement. Il s'agit d'une méthode pratique pour produire des informations formatées relatives à un appareil de restitution d'image, en utilisant un appareil de capture d'image sans défaut ou dont les défauts sont préalablement mesurés et corrigés.

Si le procédé est mis en oeuvre dans le cas d'une chaîne d'appareils comportant plusieurs appareils, par exemple un appareil photo et un scanner, le procédé produit des informations formatées relatives aux deux appareils. Il s'agit d'une méthode pratique pour permettre la correction des défauts d'un appareil photo sans pour autant connaître les défauts du scanner, dans le cas où les images utilisées par le présent procédé et par les moyens de traitement d'image ont été scannées avec le même appareil.

Pour la correction à proprement parler d'une image quelconque issue de la chaîne d'appareils précédemment décrite, un exemple simple d'implémentation peut se décrire comme suit :
- Lecture des informations formatées relatives à la chaîne d'appareils et préalablement calculées. Ces information formatées contiennent notamment le modèle paramétrable précédemment décrit.
- Lecture de toutes les informations du style format Exif, PIM ou autres qui renseignent sur l'ensemble des réglages de l'appareil et/ou de la chaîne d'appareils au moment de la prise de vue (focale, mise au point, ouverture, vitesse, flash...). Ces informations constituent les valeurs des paramètres variables du dispositif et une partie des arguments du modèle paramétrable. Ces informations par exemple sont généralement indiquées dans les entêtes des images.
- Correction : Pour chaque point PRQ de coordonnées (X,Y) sur SR correspondant à un point de l'image corrigée que l'on veut calculer, on peut constituer un argument complet du modèle paramétrable avec les coordonnées X,Y et la partie précédente des arguments du modèle paramétrable : (X, Y, focale, distance, ouverture, iso, vitesse, flash, etc.). On peut alors calculer les coordonnées d'un point de l'image à corriger (X',Y') grâce aux informations formatées. Les valeurs de (X',Y') ne seront pas nécessairement entières. On calcule alors la luminance associée au point PRQ en utilisant par exemple toute technique d'interpolation (linéaire, bilinéaire, bicubique ou autre) sur les informations de luminance prises au point (X',Y') et son voisinage dans l'image à corriger. Ce procédé est itéré pour tous les points PRQ de l'image, ce pour chaque plan couleur, de manière à obtenir une image exempte de défaut.

Le système sur la figure 8 représente une forme de mise en oeuvre de l'invention décrite précédemment. Un plan image couleur numérisé 4 est traité par un premier moyen de calcul 16 qui modélise et corrige des anomalies de géométrie desdits plans couleurs numérisés 4, de manière à obtenir des plans couleurs numérisés corrigés 17, Un deuxième moyen de calcul 18 combine lesdits plans couleurs numérisés corrigés 17, de manière à obtenir une image couleur corrigée 19, en totalité ou en partie, des aberrations chromatiques 1.

Les moyens de calcul 16 peuvent également modéliser et corriger, au moins en partie lesdites anomalies de géométrie constituées par des écarts 10 entre les défauts de géométrie 2, notamment de distorsion, desdits plans couleurs numérisés 4, de manière à obtenir des plans couleurs numérisés corrigés 17 ;

Le système sur la figure 9 représente une autre forme de mise en oeuvre de l'invention décrite précédemment. Les moyens de calcul 6 peuvent modéliser et corriger, au moins en partie, des anomalies de géométrie constituées par des défauts de distorsion 2 desdits plans couleurs numérisés 4, de manière à obtenir des plans couleurs numérisés corrigés 7, de sorte qu'il est possible d'établir une correspondance entre lesdits plans couleurs numérisés corrigés 7;

Les seconds moyens de calcul 8 représentés sur la figure 9, permettent alors en combinant lesdits plans couleurs numérisés corrigés 7, d'obtenir une image couleur corrigée 9, en totalité ou en partie, des aberrations chromatiques 1 et/ou des défauts de distorsion 2.

## Revendications

1. Procédé pour corriger les aberrations chromatiques (1) d'une image couleur (3) composée de plusieurs plans couleurs numérisés (4) ; ladite image couleur (3) ayant été réalisée au moyen d'un système optique (5) ; ledit procédé comprenant les étapes suivantes :
- l'étape de modéliser et de corriger des anomalies de géométrie constituées par des écarts (10) entre les défauts de géométrie (2), notamment de distorsion, desdits plans couleurs numérisés (4), de manière à obtenir des plans couleurs numérisés corrigés (17), la correction des anomalies de géométrie étant au moins partielle ;
de sorte qu'il est possible d'établir une correspondance entre lesdits plans couleurs numérisés corrigés (17) ;
et dans lequel l'étape de modéliser et de corriger comprend les étapes suivantes :
- produire, à l'aide d'un dispositif ou d'une chaine de dispositifs, une image d'une scène de référence, l'image présentant des aberrations chromatiques et/ou des anomalies de géométrie ;
- produire, à partir de la scène de référence, une référence virtuelle ;
- établir une bijection entre l'image de la scène de référence et la référence virtuelle ;
- calculer des projections mathématiques de la référence virtuelle sur les plans couleurs, en utilisant la même projection mathématique pour les plans couleurs ;
- calculer des informations formatées comprenant les projections mathématiques et d'au moins une caractéristiques d'un dispositif et/ou d'au moins une caractéristique d'au moins un point de l'image, et
- corriger des aberrations chromatiques dans les plans couleur de l'image couleur sur la base desdites informations formatées par application des projections mathématiques ;
- l'étape de combiner lesdits plans couleur numérisés corrigés (17), de manière à obtenir une image couleur corrigée (19), des aberrations chromatiques (1), la correction des aberrations chromatiques étant au moins partielle.

2. Système pour corriger les aberrations chromatiques (1) d'une image couleur (3) composées de plusieurs plans couleurs numérisés (4) ; ladite image couleur (3) ayant été réalisée au moyen d'un système optique (5) ;
ledit système comprenant :
- des premiers moyens de calcul (16) pour modéliser et pour corriger, des anomalies de géométrie constituées par des écarts (10) entre les défauts de géométrie (2), notamment de distorsion, desdits plans couleurs numérisés (4), de manière à obtenir des plans couleurs numérisés corrigés (17), la correction des anomalies de géométrie étant au moins partielle ;
de sorte qu'il est possible d'établir une correspondance entre lesdits plans couleurs numérisés corrigés (17) ;
et dans lequel les premiers moyens de calculs sont adaptés pour :
- produire, à l'aide d'un dispositif ou d'une chaîne de dispositifs, une image d'une scène de référence, l'image présentant des aberrations chromatiques et/ou des anomalies de géométrie ;
- produire, à partir de la scène de référence, une référence virtuelle ;
- établir une bijection ente l'image de la scène de référence et la référence virtuelle ;
- calculer des projections mathématiques de la référence virtuelle sur les plans de couleurs, en utilisant la même projection mathématique pour les plans couleurs ;
- calculer des informations formatées comprenant les projections mathématiques et d'au moins une caractéristiques d'un dispositif et/ou d'au moins une caractéristique d'au moins un point de l'image, et
- corriger des aberrations chromatiques dans les plans couleur de l'image sur la base desdites informations formatées par application des projections mathématiques ;
- des seconds moyens de calcul (18) pour combiner lesdits plans couleurs numérisés corrigés (17), de manière à obtenir une image couleur corrigée (19), des aberrations chromatiques (1), la correction des aberrations chromatiques étant au moins partielle.

## Patentansprüche

1. Verfahren zur Korrektur der chromatischen Aberrationen (1) eines Farbbildes (3), das sich aus mehreren digitalen Farbebenen (4) zusammensetzt, wobei das Farbbild (3) mit Hilfe eines optischen Systems (5) hergestellt wurde, wobei das Verfahren die folgenden Schritte umfasst:
- den Schritt der Modellierung und Korrektur der Geometrieanomalien, die von Abweichungen (10) zwischen den Geometriefehlern (2), insbesondere Verzerrung, der digitalen Farbebenen (4) gebildet sind, um korrigierte digitale Farbebenen (17) zu erhalten, wobei die Korrektur der Geometrieanomalien zumindest teilweise erfolgt;
so dass es möglich ist, eine Entsprechung zwischen den korrigierten digitalen Farbebenen (17) herzustellen;
und bei dem der Schritt der Modellierung und Korrektur die folgenden Schritte umfasst:
- mit Hilfe einer Vorrichtung oder einer Kette von Vorrichtungen ein Bild einer Referenzszene zu erzeugen, wobei das Bild chromatische Aberrationen und/oder Geometrieanomalien aufweist;
- aus der Referenzszene eine virtuelle Referenz zu erzeugen;
- eine Bijektion zwischen dem Bild der Referenzszene und der virtuellen Referenz herzustellen;
- mathematische Projektionen der virtuellen Referenz auf die Farbebenen zu berechnen, wobei dieselbe mathematische Projektion für die Farbebenen verwendet wird;
- formatierte Informationen zu berechnen, umfassend die mathematischen Projektionen und mindestens ein Merkmal einer Vorrichtung und/oder mindestens ein Merkmal mindestens eines Punktes des Bildes, und
- chromatische Aberrationen in den Farbebenen des Farbbildes auf Basis der formatierten Informationen durch Anwendung der mathematischen Projektionen zu korrigieren;
- den Schritt der Kombination der korrigierten digitalen Farbebenen (17), um ein von den chromatischen Aberrationen (1) korrigiertes Farbbild (19) zu erhalten, wobei die Korrektur der chromatischen Aberrationen zumindest teilweise erfolgt.

2. System zur Korrektur der chromatischen Aberrationen (1) eines Farbbildes (3), das sich aus mehreren digitalen Farbebenen (4) zusammensetzt, wobei das Farbbild (3) mit Hilfe eines optischen Systems (5) hergestellt wurde,
wobei das System umfasst:
- erste Berechnungsmittel (16), um Geometrieanomalien, die von Abweichungen (10) zwischen den Geometriefehlern (2), insbesondere Verzerrung, der digitalen Farbebenen (4) gebildet sind, zu modellieren und korrigieren, um korrigierte digitale Farbebenen (17) zu erhalten, wobei die Korrektur der Geometrieanomalien zumindest teilweise erfolgt;
so dass es möglich ist, eine Entsprechung zwischen den korrigierten digitalen Farbebenen (17) herzustellen;
und bei dem die ersten Berechnungsmittel dazu vorgesehen sind:
- mit Hilfe einer Vorrichtung oder einer Kette von Vorrichtungen ein Bild einer Referenzszene zu erzeugen, wobei das Bild chromatische Aberrationen und/oder Geometrieanomalien aufweist;
- aus der Referenzszene eine virtuelle Referenz zu erzeugen;
- eine Bijektion zwischen dem Bild der Referenzszene und der virtuellen Referenz herzustellen;
- mathematische Projektionen der virtuellen Referenz auf die Farbebenen zu berechnen, wobei dieselbe mathematische Projektion für die Farbebenen verwendet wird;
- formatierte Informationen zu berechnen, umfassend die mathematischen Projektionen und mindestens ein Merkmal einer Vorrichtung und/oder mindestens ein Merkmal mindestens eines Punktes des Bildes, und
- chromatische Aberrationen in den Farbebenen des Bildes auf Basis der formatierten Informationen durch Anwendung der mathematischen Projektionen zu korrigieren;
- zweite Berechnungsmittel (18), um die korrigierten digitalen Farbebenen (17) zu kombinieren, um ein von den chromatischen Aberrationen (1) korrigiertes Farbbild (19) zu erhalten, wobei die Korrektur der chromatischen Aberrationen zumindest teilweise erfolgt.

## Claims

1. Method for correcting the chromatic aberrations (1) in a colour image (3) composed of multiple digitized colour planes (4); said colour image (3) having been produced by means of an optical system (5); said method comprising the following steps:
- the step of modelling and correcting geometrical anomalies formed by differences (10) between the geometrical defects (2), in particular distortion, of said digitized colour planes (4) so as to obtain corrected digitized colour planes (17), the correction of the geometrical anomalies being at least partial;
such that it is possible to establish a correspondence between said corrected digitized colour planes (17);
and in which the modelling and correcting step comprises the following steps:
- producing, using a device or a chain of devices, an image of a reference scene, the image having chromatic aberrations and/or geometrical anomalies;
- producing, based on the reference scene, a virtual reference;
- establishing a bijection between the image of the reference scene and the virtual reference;
- computing mathematical projections of the virtual reference on the colour planes, by using the same mathematical projection for the colour planes;
- computing formatted information comprising the mathematical projections and at least one characteristic of a device and/or at least one characteristic of at least one point in the image, and
- correcting chromatic aberrations in the colour planes of the colour image on the basis of said formatted information through the application of the mathematical projections;
- the step of combining said corrected digitized colour planes (17) so as to obtain a colour image (19) corrected of the chromatic aberrations (1), the correction of the chromatic aberrations being at least partial.

2. System for correcting the chromatic aberrations (1) in a colour image (3) composed of multiple digitized colour planes (4); said colour image (3) having been produced by means of an optical system (5) ;
said system comprising:
- first computing means (16) for modelling and correcting geometrical anomalies formed by differences (10) between the geometrical defects (2), in particular distortion, of said digitized colour planes (4) so as to obtain corrected digitized colour planes (17), the correction of the geometrical anomalies being at least partial;
such that it is possible to establish a correspondence between said corrected digitized colour planes (17);
and in which the first computing means are capable of:
- producing, using a device or a chain of devices, an image of a reference scene, the image having chromatic aberrations and/or geometrical anomalies;
- producing, based on the reference scene, a virtual reference;
- establishing a bijection between the image of the reference scene and the virtual reference;
- computing mathematical projections of the virtual reference on the colour planes, by using the same mathematical projection for the colour planes;
- computing formatted information comprising the mathematical projections and at least one characteristic of a device and/or at least one characteristic of at least one point in the image, and
- correcting chromatic aberrations in the colour planes of the colour image on the basis of said formatted information through the application of the mathematical projections;
- second computing means (18) for combining said corrected digitized colour planes (17) so as to obtain a colour image (19) corrected of the chromatic aberrations (1), the correction of the chromatic aberrations being at least partial.
